# FASCICULE DE BREVET EUROPEEN

(11) **EP 3 880 522 B1**
(45) Date de publication et mention de la délivrance du brevet: **20.07.2022**
(21) Numéro de dépôt: 19802187.5
(22) Date de dépôt: 18.11.2019
(51) Int. Cl.: B60R 19/48, H01Q 1/02, H01Q 1/32

(54) **PIÈCE EXTÉRIEURE DE VÉHICULE AUTOMOBILE MULTICOUCHE COMPRENANT UN ÉLÉMENT CHAUFFANT**
MEHRSCHICHTIGES KRAFTFAHRZEUGAUSSENTEIL MIT HEIZELEMENT
MULTI-LAYER MOTOR VEHICLE EXTERIOR PART COMPRISING A HEATING ELEMENT

(30) Priorité: 16.11.2018 FR 1871581
(43) Date de publication de la demande: 22.09.2021
(73) Titulaire: Compagnie Plastic Omnium, 69007 Lyon (FR)
(72) Inventeur: STABLO, Frédéric, 01150 SAINTE-JULIE (FR)
(74) Mandataire: LLR
(86) Numéro de dépôt international: PCT/EP2019/081569
(87) Numéro de publication internationale: WO 2020/099670

(56) Documents cités:
- EP-A1- 3 252 494
- EP-A2- 1 160 914
- EP-A2- 2 741 105
- DE-A1- 10 156 699

## Description

L'invention concerne une pièce extérieure de véhicule automobile, et notamment une pièce permettant de protéger un capteur et comprenant un élément de dégivrage.

Les véhicules automobiles sont de plus en plus souvent équipés de capteurs extérieurs permettant de mesurer des paramètres de l'environnement extérieur du véhicule. En particulier, de nombreux véhicules comprennent des capteurs d'assistance à la conduite et/ou destinés à améliorer la sécurité de la conduite, tels que des radars de recul, des capteurs de détection d'obstacles, etc.

De tels capteurs sont souvent placés dans les pare-chocs ou les portières des véhicules et sont donc soumis à des agressions extérieures, telles que les intempéries, les poussières, les chocs, et il est préférable qu'ils soient protégés de ces agressions extérieures. La protection peut être assurée par un élément telle qu'un plaque ou un film placé vers l'extérieur du véhicule par rapport au capteur. Selon le type des capteurs, leur fonctionnement peut être altéré par la présence de givre, de neige ou de glace sur la face extérieure de l'élément de protection des capteurs. Un moyen de dégivrage de l'élément qui protège les capteurs est alors nécessaire. Le dégivrage se fait le plus souvent par chauffage au moyen d'un dispositif transformant une énergie électrique en énergie thermique.

Actuellement, les pièces extérieures de véhicule qui doivent pouvoir être chauffées sont par exemple pourvues d'un film chauffant surmoulé. Un tel procédé de fabrication impose une charge de travail élevée avec de nombreuses étapes de manipulation. De plus, en cas de dommages ou de formation de plis, un composant fabriqué de cette manière peut être rendu inopérant et est donc exclu. Par ailleurs, sur les pièces extérieures construites de cette façon, la zone chauffée par le surmoulage du film utilisé est souvent située non pas sur la surface extérieure de la pièce, mais à l'intérieur, de sorte que l'efficacité du chauffage se trouve limitée. En outre, l'utilisation de films chauffants ne permet généralement aucune mise en forme optiquement visible de l'extérieur de la zone située sous ou derrière le film chauffant.

Le document EP 1 160 914 A2 divulgue une pièce extérieure de véhicule automobile selon le préambule de la revendication 1 ainsi qu'un procédé de fabrication d'une telle pièce.

L'invention a notamment pour but de remédier aux inconvénients ci-dessus, et de proposer une pièce extérieure de véhicule automobile dont la fabrication est facile, rapide et économique, permettant une mise en forme aisée de la pièce sur sa face visible depuis l'extérieur, et présentant une fonction de dégivrage très efficace.

A cet effet l'invention a pour objet une pièce extérieure de véhicule automobile présentant les caractéristiques de la revendication 1.

Ainsi, lorsque la pièce est installée sur le véhicule, la seconde couche est placée vers l'extérieur du véhicule, l'élément chauffant se trouve proche de la surface extérieure de la seconde couche notamment du fait de la présence de la zone de surépaisseur sur la première couche permettant de réduire davantage la distance entre l'élément chauffant agencé sur cette zone et la surface extérieure de la seconde couche. De plus, étant donné que l'élément chauffant est un filament chauffant, l'élément chauffant a une épaisseur faible par rapport à celle des première et seconde couches, ce qui est avantageux car cela permet de limiter l'épaisseur totale de la pièce extérieure. On entend ici par « proche de la surface extérieure » une distance sensiblement égale ou inférieure à 0,1mm de la surface extérieure. Cela permet que le chauffage de la surface externe de la pièce extérieure soit efficace, rendant le dégivrage rapide et complet, ce qui évite que les capteurs soient non opérationnels pendant de longues durées, tout en protégeant l'élément chauffant des agressions extérieures.

On entend ici par « couche » une étendue plus ou moins uniforme d'une substance dont l'épaisseur est faible relativement à l'étendue superficielle.

Suivant d'autres caractéristiques optionnelles de la pièce extérieure de véhicule automobile, prises seules ou en combinaison :
- la zone de surépaisseur de la première couche s'étend vers l'extérieur depuis le reste de la première couche. Cela permet notamment de réduire la distance entre l'élément chauffant agencé sur la zone de surépaisseur et la surface extérieure de la seconde couche.
- une face externe de la seconde couche, non en contact avec l'élément chauffant est sensiblement plane.
- les couches sont sensiblement transparentes aux ondes électromagnétiques dans des fréquences utilisées par des radar. Cela est plus particulièrement utile si les capteurs sont du type correspondant.

- les couches sont sensiblement transparentes aux ondes électromagnétiques dans des fréquences de la lumière visible. Cela est plus particulièrement utile si les capteurs sont des lidar. La transparence des couches présente en outre l'avantage que l'élément chauffant est visible depuis l'extérieur du véhicule. Cela est d'autant plus avantageux dans le cas où l'élément chauffant est placé sur la zone de surépaisseur de la première couche car on obtient alors un effet de profondeur qui donne à une personne regardant la pièce extérieure l'impression que l'élément chauffant n'est pas en contact avec la pièce.
- la paroi est composée d'un mélange de polymère acrylonitrile butadiène styrène et de polycarbonate. Ce matériau est particulièrement avantageux pour la construction des pièces extérieures de véhicule automobile, du fait de sa bonne transformabilité, de ses propriétés mécaniques élevées, en particulier sa résistance aux chocs, et de sa résistance à la chaleur.
- les premières et secondes couches sont composées de polyuréthane. Ce matériau est particulièrement bien adapté du fait de sa processabilité, et de ses propriétés mécaniques, ainsi que de certaines de ses propriétés physiques, telle que la transparence aux ondes électromagnétiques sur les bandes de fréquence utilisée par les capteurs radar.
- la première couche a une épaisseur de l'ordre de 3,2 mm dans la zone de surépaisseur et a une épaisseur de l'ordre de 2,5 mm dans la zone en-dehors de la zone de surépaisseur.
- la seconde couche a une épaisseur de l'ordre de 3 mm dans sa section la plus épaisse et de 0,7 mm dans sa section la plus mince située en regard de la zone de surépaisseur comprenant l'élément chauffant.
- la pièce extérieure comprend des éléments de connexion électrique de l'élément chauffant.

L'invention a également pour objet un procédé de fabrication d'une pièce extérieure de véhicule automobile, présentant les caractéristiques de la revendication 12.

Ce procédé de fabrication est simple à mettre en œuvre, et comprend un nombre assez faible d'étapes, ce qui permet également une fabrication rapide. De plus, ce procédé de fabrication permet que l'on puisse fabriquer l'élément chauffant indépendamment du reste de la pièce extérieure, et non plus simultanément comme dans les procédés de l'état de la technique. Cela simplifie la mise en œuvre et permet également que si besoin l'élément chauffant puisse être stocké avant son utilisation.

Dans un mode de réalisation préférentiel, on forme une zone de surépaisseur dans la première couche et on dépose l'élément chauffant sur la zone de surépaisseur.

Suivant d'autres caractéristiques optionnelles du procédé de fabrication d'une pièce extérieure de véhicule automobile seules ou en combinaison :
- on réalise la paroi comprenant une face destinée à être visible depuis l'extérieur du véhicule par moulage de matière plastique.
- on revêt la face destinée à être visible depuis l'extérieur du véhicule d'une première couche par moulage par injection d'un polymère ou d'un mélange de polymères dans un moule dont une chambre de moulage possède une forme permettant la formation d'une zone de surépaisseur dans la couche.
- on revêt la première couche et l'élément chauffant avec une seconde couche par moulage par injection d'un polymère ou d'un mélange de polymères.
- la paroi destinée à être visible depuis l'extérieur du véhicule est composée d'un mélange de polymère acrylonitrile butadiène styrène et de polycarbonate.
- le polymère ou le mélange de polymères injecté pour former les première couche et seconde couche est du polyuréthane.

### Brève description des figures

L'invention sera mieux comprise à la lecture de la description qui va suivre donnée uniquement à titre d'exemple et faite en se référant aux dessins annexés dans lesquels :
[Fig. 1] est une vue en perspective d'une pièce extérieure de véhicule automobile selon un mode de réalisation de l'invention.
[Fig. 2] est une vue en perspective de la pièce extérieure de la figure 1 à une étape intermédiaire de son procédé de fabrication, i.e. avant le revêtement par la seconde couche.
[Fig. 3] est une section latérale de la pièce extérieure de la figure 1.
[Fig. 4] est une section latérale de la pièce extérieure de la figure 1, selon une coupe perpendiculaire à celle de la figure 3.

### Description détaillée

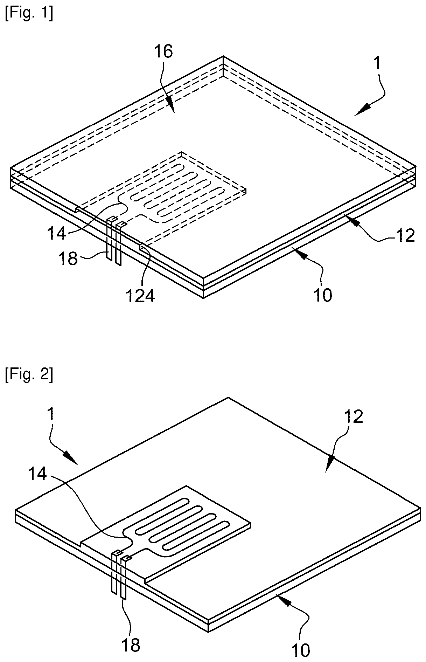

On a représenté sur les figures 1 à 4 une pièce extérieure de véhicule automobile selon un premier mode de réalisation, désigné par la référence générale 1.

La pièce extérieure de véhicule automobile 1 est destinée à protéger des capteurs placés dans un pare-chocs ou dans d'autres éléments de carrosserie d'un véhicule automobile. Ces capteurs peuvent être de tous types, et certains d'entre eux peuvent ne plus fonctionner en cas de présence de givre, neige, glace sur la pièce extérieure 1, sachant qu'un givrage risque de se produire dès que la température extérieure descend en-dessous de 10°C, en raison de la vitesse de déplacement du véhicule. Il est donc nécessaire que la pièce extérieure 1, en plus de sa fonction de protection contre les agressions extérieures, possède une fonction de dégivrage en regard du capteur qu'elle protège et qui est situé du côté intérieur du véhicule par rapport à la pièce extérieure. La pièce extérieure de véhicule automobile 1 va être décrite en référence aux figures 1 à 4.

La pièce extérieure 1 comprend une paroi comprenant une face 10 destinée à être visible depuis l'extérieur du véhicule et revêtue d'une première couche 12. La couche 12 recouvre au moins partiellement ladite face10. La première couche 12 est elle-même recouverte d'une seconde couche 16. La pièce extérieure 1 est représentée à plat sur les figures, mais il est bien entendu qu'elle peut être placée verticalement lorsqu'elle est installée sur le véhicule automobile. Ainsi la face 10 est positionnée du côté intérieur du véhicule, et la seconde couche 16 est positionnée vers l'extérieur du véhicule lorsque la pièce extérieure 1 est installée sur le véhicule.

Un élément chauffant 14 est positionné sur la couche 12. L'élément chauffant 14 comprend des parties de connexion électrique 18 destinées à être raccordées à une alimentation électrique. Généralement, l'élément chauffant 14 transforme une énergie électrique en énergie thermique, par effet Joule. L'élément chauffant 14 est ainsi utilisé pour dégivrer la pièce extérieure dans la partie en regard d'un capteur placé vers l'intérieur du véhicule par rapport à la pièce extérieure 1

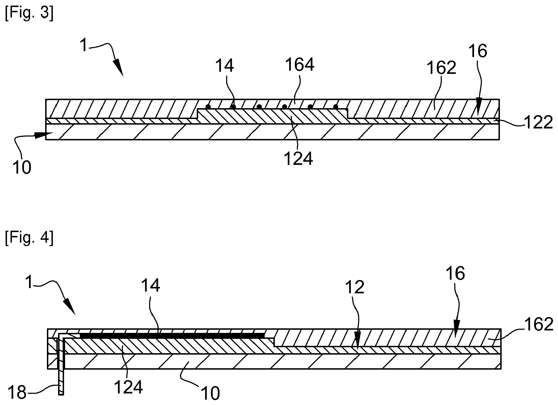

Dans un mode de réalisation avantageux, la première couche 12 comporte une zone dite « de surépaisseur » 124, plus épaisse que le reste de la couche 122. Comme illustré sur la figure 3, l'élément chauffant 14 est positionné uniquement sur la zone de surépaisseur 124 de la couche 12. De plus, la zone de surépaisseur 124 s'étend vers l'extérieur depuis le reste de la première couche 12. De cette manière, la distance entre la zone de surépaisseur 124, donc l'élément chauffant 14 agencé sur cette dernière, et la surface extérieure de la seconde couche, est réduite davantage. En d'autres termes, l'élément chauffant 14 se trouve proche de la surface extérieure de la couche 16, Ici on entend par « proche » une distance sensiblement égale ou inférieure à 0,1mm de la surface extérieure de la couche 16.

Selon l'invention, l'élément chauffant 14 est un filament chauffant. De tels filaments sont traditionnellement utilisés sur les parties de véhicules nécessitant d'être dégivrées par chauffage, comme par exemple les vitres arrière des véhicules ou les rétroviseurs. Dans le cas où le capteur situé en regard de l'élément chauffant 14 est un capteur radar ou capteur lidar, le filament est agencé de manière à ne pas perturber le passage des ondes électromagnétiques nécessaires au fonctionnement du capteur.

La seconde couche 16 recouvre au moins partiellement la première couche 12, au moins sur la zone de surépaisseur 124 de la première couche 12. De la sorte, la seconde couche 16 recouvre également l'élément chauffant 14. Autrement dit, l'élément chauffant 14 est agencé entre la première couche 12 et la seconde couche 16, ou encore « en sandwich » entre les deux couches 12 et 16. Ainsi, l'élément 14 est protégé des agressions extérieures.

En outre, l'élément chauffant 14 est placé uniquement sur la zone de surépaisseur 124. Par conséquent, lorsque la surface extérieure de la couche 16 est sensiblement plane, ce qui est le cas le plus fréquent, l'épaisseur de la couche 16 dans la partie 164 en regard de l'élément chauffant 14 placé sur la zone de surépaisseur 124 est faible, ce qui implique que l'élément chauffant est proche de la surface extérieure de la couche 16. Cela permet que le chauffage de la surface extérieure de la couche 16 soit plus efficace, et par conséquent que le dégivrage soit rapide et complet. Ainsi, les capteurs placés vers l'intérieur du véhicule par rapport à la pièce 1 peuvent fonctionner correctement.

La paroi comprenant une face 10 peut être la paroi extérieure d'un pare-chocs ou d'un autre élément de carrosserie en plastique. La paroi peut également être la surface extérieure d'un élément rapporté sur un pare-chocs ou d'un autre élément de carrosserie.

Dans un mode de réalisation préférentiel, la première couche 12 a une épaisseur de l'ordre de 3,2 mm dans la zone de surépaisseur 124 et a une épaisseur de l'ordre de 2,5 mm dans la partie 122 en-dehors de la zone de surépaisseur.

Dans un mode de réalisation préférentiel, la seconde couche 16 a une épaisseur de l'ordre de 3 mm dans sa section 162 la plus épaisse et a une épaisseur de l'ordre de 0,7 mm dans sa section la plus mince 164 située en regard de la zone de surépaisseur 124 comprenant l'élément chauffant 14.

Avantageusement l'élément chauffant 14 a une épaisseur faible par rapport aux épaisseurs des couches 12 et 16. Cela permet en particulier de limiter l'épaisseur totale de la pièce extérieure 1, ce qui est préférable pour des raisons d'esthétique et de poids.

Avantageusement, mais de manière non limitative, la surface 10 est composé d'un matériau polymère consistant en un mélange de polymère Acrylonitrile Butadiène Styrène et de polycarbonate, et souvent dénommé ABS-PC. Un tel matériau possède en effet des caractéristiques bien adaptées à la fabrication de pièces extérieures de véhicules automobiles, et en particulier une bonne transformabilité ou processabilité, une bonne résistance aux chocs, et une bonne résistance à la chaleur, ainsi qu'une bonne tenue dans le temps.

Avantageusement, la première et la seconde couche 12, 16 sont composées de polyuréthane. Le polyuréthane convient bien car il possède une bonne transformabilité ou processabilité, et de bonnes propriétés mécaniques, et il est en outre transparent aux ondes électromagnétiques dans les fréquences utilisées par les capteurs radar. D'autre part, le polyuréthane possède une bonne capacité d'adhérence sur l'ABS/PC, ce qui est un avantage supplémentaire.

En outre le polyuréthane peut également être transparent à la lumière visible, ce qui est utile si les capteurs sont des capteurs de type lidar. La transparence des couches 12, 16 à la lumière visible présente en outre l'avantage que l'élément chauffant 14 est visible depuis l'extérieur du véhicule. Cela est d'autant plus avantageux dans le cas où l'élément chauffant 14 est placé sur la zone de surépaisseur 124 de la première couche 12 car on obtient alors un effet de profondeur qui donne à une personne regardant la pièce extérieure l'impression que l'élément chauffant n'est pas en contact avec la pièce, ou ne fait pas partie de cette pièce, ce qui est esthétiquement appréciable.

On comprend que les matériaux polymères mentionnés ci-dessus le sont à titre illustratif et de manière non limitative, et que d'autres matériaux peuvent convenir.

La pièce extérieure de véhicule automobile 1 peut être fabriquée selon le procédé suivant :
- on réalise une paroi comprenant une face 10, destinée à être visible depuis l'extérieur du véhicule,
- on revêt la ladite face 10 avec une première couche 12,
- on dépose un élément chauffant 14 sur la couche 12,
- on revêt la première couche 12 et l'élément chauffant 14 avec une seconde couche 16.

De préférence les couches 12 et 16 sont formées par moulage par injection.

Si la couche 12 est formée par moulage par injection la chambre de moulage a une forme telle qu'elle permet la formation d'une zone de surépaisseur 124 dans la couche 12.

Avantageusement, dans ce procédé, la paroi comprenant une face 10 est composé d'ABS-PC (mélange d'acrylonitrile butadiène styrène et de polycarbonate), et les première couche 12 et seconde couche 16 sont composées de polyuréthane.

Ce procédé de fabrication est simple à mettre en œuvre, et comprend un nombre assez faible d'étapes, ce qui permet également une fabrication rapide. En particulier, l'élément chauffant 14 est simplement déposé sur la zone de surépaisseur 124 de la première couche 12, et est ensuite maintenu en place par le surmoulage de la seconde couche 16.

## Revendications

1. Pièce extérieure de véhicule automobile (1) comprenant :
- une paroi comprenant une face (10) destinée à être visible depuis l'extérieur du véhicule, ladite face (10) étant revêtue d'une première couche (12),
- une seconde couche (16) recouvrant la première couche (12),
- un élément chauffant (14) agencé entre les deux couches (12,16) la première couche (12) comportant une zone de surépaisseur (124) et l'élément chauffant (14) étant agencé uniquement sur la zone de surépaisseur (124) de la première couche (12) **caractérisée en ce que** l'élément chauffant (14) est un filament chauffant.

2. Pièce extérieure (1) selon la revendication précédente, dans laquelle la zone de surépaisseur (124) de la première couche (12) s'étend vers l'extérieur depuis le reste de la première couche (12).

3. Pièce extérieure (1) selon l'une des revendications précédentes, dans laquelle une face extérieure de la seconde couche (16), non en contact avec l'élément chauffant (14), est sensiblement plane.

4. Pièce extérieure (1) selon l'une des revendications précédentes, dans laquelle les couches (12,16) sont sensiblement transparentes aux ondes électromagnétiques dans des fréquences utilisées par des radars

5. Pièce extérieure (1) selon l'une des revendications précédentes, dans laquelle les couches (12,16) sont sensiblement transparentes aux ondes électromagnétiques dans des fréquences de la lumière visible.

6. Pièce extérieure (1) selon l'une des revendications précédentes, dans laquelle la paroi (10) de la pièce (1) est composée d'un mélange de polymère acrylonitrile butadiène styrène et de polycarbonate.

7. Pièce extérieure (1) selon l'une des revendications précédentes, dans laquelle les premières et secondes couches (12, 16) sont composées de polyuréthane.

8. Pièce extérieure (1) selon l'une des revendications précédentes, dans laquelle la première couche (12) a une épaisseur de l'ordre de 3,2 mm dans la zone de surépaisseur (124) et a une épaisseur de l'ordre de 2,5 mm dans la zone (122) en-dehors de la zone de surépaisseur (124).

9. Pièce extérieure (1) selon l'une des revendications précédentes, dans laquelle la seconde couche (16) a une épaisseur de l'ordre de 3 mm dans sa section la plus épaisse (162) et une épaisseur de 0,7 mm dans sa section la plus mince (164) située en regard de la zone de surépaisseur (124) comprenant l'élément chauffant (14).

10. Pièce extérieure (1) selon l'une des revendications précédentes, comprenant des éléments de connexion électrique (18) de l'élément chauffant (14).

11. Pièce extérieure (1) selon l'une des revendications précédentes, dans laquelle au moins une des deux couches (12, 16) est obtenue par moulage par injection.

12. Procédé de fabrication d'une pièce extérieure (1) selon l'une des revendications précédentes, comportant les étapes suivantes dans l'ordre d'exécution :
- on réalise une paroi comprenant une face (10) ;
- on revêt ladite face (10) d'une première couche (12) comportant une zone de surépaisseur (124);
- on dépose un élément chauffant (14) qui est un filament chauffant uniquement sur la zone de surépaisseur (124) de la première couche (12);
- on revêt la première couche (12) et l'élément chauffant (14) d'une seconde couche (16).

13. Procédé selon la revendication 12, dans lequel on réalise la paroi comprenant une face (10) par moulage de matière plastique.

14. Procédé selon l'une des revendications 12 à 13 dans lequel on revêt la paroi comprenant une face (10) d'une première couche (12) par moulage par injection d'un polymère ou d'un mélange de polymères dans un moule dont une chambre de moulage possède une forme permettant la formation d'une zone de surépaisseur (124) dans la couche (12).

15. Procédé selon l'une des revendications 12 à 14, dans lequel on revêt la première couche (12) et l'élément chauffant (14) avec une seconde couche (16) par moulage par injection d'un polymère ou d'un mélange de polymères.

16. Procédé selon l'une des revendications 12 à 15, dans lequel la paroi comprenant une face (10) est composée d'un mélange de polymère acrylonitrile butadiène styrène et de polycarbonate.

17. Procédé selon l'une des revendications 12 à 16. dans lequel le polymère ou le mélange de polymères injecté pour former les première couche (12) et seconde couche (16) est du polyuréthane.

## Patentansprüche

1. Außenteil (1), aufweisend:
- eine Wand umfassend einer Seite (10), die von der Außenseite des Fahrzeugs sichtbar ist, wobei die Seite (10) mit einer ersten Schicht (12) beschichtet ist,
- eine zweite Schicht (16), die die erste Schicht (12) bedeckt,
- ein Heizelement (14), das zwischen den beiden Schichten (12.16) angeordnet ist;
wobei die erste Schicht einen Verdickungsbereich (124) aufweist und wobei das Heizelement (14) nur auf dem Verdickungsbereich (124) der ersten Schicht (12) angeordnet ist, **dadurch gekennzeichnet, dass** das Heizelement (14) ein Heizdraht ist.

2. Außenteil (1) nach dem vorhergehenden Anspruch, wobei sich Verdickungsbereich (124) der ersten Schicht (12) vom Rest der ersten Schicht (12) nach außen erstreckt.

3. Außenteil (1) nach einem der vorhergehenden Ansprüche, wobei eine Außenseite der zweiten Schicht (16), die nicht in Kontakt mit dem Heizelement (14) steht, im Wesentlichen eben ist.

4. Außenteil (1) nach einem der vorhergehenden Ansprüche, wobei die Schichten (12, 16) für elektromagnetische Wellen mit Frequenzen, die von Radargeräten verwendet sind, im Wesentlichen durchlässig sind.

5. Außenteil (1) nach einem der vorhergehenden Ansprüche, wobei die Schichten (12, 16) für elektromagnetische Wellen mit Frequenzen des sichtbaren Lichts im Wesentlichen durchlässig sind.

6. Außenteil (1) nach einem der vorhergehenden Ansprüche, wobei die Seite (10) des Außenteils (1) aus einer Mischung aus Acrylnitril-Butadien-Styrol-Polymer und Polycarbonat besteht.

7. Außenteil (1) nach einem der vorhergehenden Ansprüche, wobei die erste und die zweite Schicht (12, 16) aus Polyurethan bestehen.

8. Außenteil (1) nach einem der vorhergehenden Ansprüche, wobei die erste Schicht (12) im Verdickungsbereich (124) eine Dicke in der Größenordnung von 3,2 mm hat und im Bereich (122), außerhalb des Verdickungsbereiches (124), eine Dicke in der Größenordnung von 2,5 mm hat.

9. Außenteil (1) nach einem der vorhergehenden Ansprüche,
wobei die zweite Schicht (16) in ihrem dicksten Abschnitt (162) eine Dicke in der Größenordnung von 3 mm und in ihrem dünnsten Abschnitt (164), der dem das Heizelement (14) umfassenden Verdickungsbereich (124) zugewandt ist, eine Dicke von 0,7 mm aufweist.

10. Außenteil (1) nach einem der vorhergehenden Ansprüche, das elektrische Verbindungselemente (18) des Heizelements (14) aufweist.

11. Außenteil (1) nach einem der vorhergehenden Ansprüche, wobei mindestens eine der beiden Schichten (12, 16) durch Spritzgießen erhalten ist.

12. Verfahren zur Herstellung eines Außenteils (1) nach einem der vorhergehenden Ansprüche, aufweisend die folgenden Schritte in der Reihenfolge ihrer Durchführung:
- Herstellen eine Wand, die eine Seite (10) umfasst;
- Beschichten die Seite (10) mit einer ersten Schicht (12), die einen Verdickungsbereich (124) aufweist;
- Hinterlegen ein Heizelement (14), das ein Heizdraht ist, nur auf dem Verdickungsbereich (124) der ersten Schicht (12);
- Beschichten der ersten Schicht (12) und des Heizelementes (14) mit einer zweiten Schicht (16).

13. Verfahren nach Anspruch 12, wobei die Wand, die die Seite (10) umfasst, durch Gießen von Kunststoffmaterial hergestellt ist.

14. Verfahren nach einem der Ansprüche 12 bis 13, wobei die Wand, die die Seite (10) aufweist, mit einer ersten Schicht (12) durch Gießen eines Polymers oder einer Polymermischung in einer Form beschichtet ist, wobei die Formkammer eine Form hat, die die Bildung eines Verdickungsbereiches (124) in der Schicht (12) ermöglicht.

15. Verfahren nach einem der Ansprüche 12 bis 14, wobei die erste Schicht (12) und das Heizelement (14) mit einer zweiten Schicht (16) durch Gießen mit einem Polymer oder einer Polymermischung beschichtet sind.

16. Verfahren nach einem der Ansprüche 12 bis 15, wobei die Wand, die die Seite (10) aufweist, aus einer Mischung aus Acrylnitril-Butadien-Styrol-Polymer und Polycarbonat besteht.

17. Verfahren nach einem der Ansprüche 12 bis 16, wobei das Polymer oder die Polymermischung, das/die zur Bildung der ersten Schicht (12) und der zweiten Schicht (16) eingespritzt ist, Polyurethan ist.

## Claims

1. Motor vehicle exterior part (1) comprising:
- a wall comprising a face (10) intended to be visible from outside of a vehicle, said face (10) being coated with a first layer (12),
- a second layer (16) covering the first layer (12),
- a heating element (14) arranged between the two layers (12,16),
the first layer (12) comprising an area of increased thickness (124) and the heating element (14) being arranged only on the area of increased thickness (124) of the first layer (12), **characterized in that** the heating element is a heating filament

2. Exterior part (1) according to the preceding claim, wherein the area of increased thickness (124) of the first layer (12) extends outward from the rest of the first layer (12).

3. Exterior part (1) according to one of the preceding claims, wherein an exterior face of the second layer (16), not in contact with the heating element (14), is substantially planar.

4. Exterior part (1) according to one of the preceding claims, wherein the layers (12,16) are substantially transparent to electromagnetic waves at frequencies used by radars.

5. Exterior part (1) according to one of the preceding claims, wherein the layers (12,16) are substantially transparent to electromagnetic waves at frequencies of visible light.

6. Exterior part (1) according to one of the preceding claims, wherein the wall (10) of the part (1) is composed of a mixture of acrylonitrile butadiene styrene polymer and polycarbonate.

7. Exterior part (1) according to one of the preceding claims, wherein the first and second layers (12, 16) are made of polyurethane.

8. Exterior part (1) according to one of the preceding claims, wherein the first layer (12) has a thickness of about 3.2 mm in the area of increased thickness (124) and has a thickness of about 2.5 mm in the area (122) outside of the area of increased thickness (124).

9. Exterior part (1) according to one of the preceding claims, wherein the second layer (16) has a thickness of about 3 mm in its thickest section (162) and has a thickness of 0.7 mm in its thinnest section (164) located opposite the area of increased thickness (124) comprising the heating element (14).

10. Exterior part (1) according to one of the preceding claims, comprising electrical connection elements (18) of the heating element (14).

11. Exterior part (1) according to one of the preceding claims, wherein at least one of the two layers (12, 16) is obtained by injection molding.

12. Method of manufacturing an exterior part (1) according to one of the preceding claims, comprising the following steps in the order of execution:
- a wall comprising a face (10) is produced;
- said face (10) is coated with a first layer (12) comprising an area of increased thickness (124);
- a heating element (14) which is a heating filament is deposited only on the area of increased thickness (124) of the first layer (12);
- the first layer (12) and the heating element (14) are coated with a second layer (16).

13. Method according to claim 12, wherein the wall comprising a face (10) is produced by molding of plastic material.

14. Method according to one of claims 12 to 13, wherein the wall comprising a face (10) is coated with a first layer (12) by injection molding of a polymer or of a mixture of polymers in a mold, a molding chamber of which has a shape allowing the formation of an area of increased thickness (124) in the layer (12).

15. Method according to one of claims 12 to 14, wherein the first layer (12) and the heating element (14) are coated with a second layer (16) by injection molding of a polymer or a mixture of polymers.

16. Method according to one of claims 12 to 15, wherein the wall comprising a face (10) is composed of a mixture of acrylonitrile butadiene styrene polymer and polycarbonate.

17. Method according to one of claims 12 to 16, wherein the polymer or the mixture of polymers injected to form the first layer (12) and the second layer (16) is polyurethane.
